# EUROPEAN PATENT APPLICATION

(11) **EP 4 733 576 A1**
(43) Date of publication of application: **29.04.2026**
(21) Application number: 24209232.8
(22) Date of filing: 28.10.2024
(51) Int. Cl.: F03D 1/06, F03D 80/00, F03D 13/30, F03D 80/40, F03D 17/00

(54) **A METHOD OF MANUFACTURING A WIND TURBINE ROTOR BLADE WITH A SET OF HEATING ELEMENTS**

(71) Applicant: Nordex Energy SE & Co. KG, 22419 Hamburg (DE)
(72) Inventor: Pospischil, Lars, 22419 Hamburg (DE)
(74) Representative: Völkl Siebenson Patentanwälte - Partnerschaft mbB

(57) **Abstract**

A method of manufacturing a wind turbine rotor blade comprising the following steps:
a) providing a wind turbine rotor blade having a first electrical supply line and a second electrical supply line,
b) providing a set of heating elements,
c) arranging one of the heating elements on the wind turbine rotor blade and connecting this heating element to the first electrical supply line and to the second electrical supply line,
d) measuring an electrical resistance between the first electrical supply line and the second electrical supply line and comparing the measured electrical resistance to an expected electrical resistance of a parallel connection of all heating elements already connected to the first electrical supply line and to the second electrical supply line,
e) if the measured electrical resistance corresponds to the expected electrical resistance, completing the steps c) and d) for another one of the electrical heating elements of the set of heating elements until all heating elements are connected.

## Description

The invention relates to a method of manufacturing a wind turbine rotor blade with a set of heating elements. The heating elements are supplied with an electrical heating current and are connected in parallel to electrical supply lines.

EP 2 843 228 A1 discloses a wind turbine rotor blade with an electrical heating system including a plurality of electrical heating elements arranged on an outer surface of a wind turbine rotor blade. Each of the heating elements has a carrier layer and a heating conductor arranged on the carrier layer between two opposite edges of the heating element in a meandering pattern. End sections of the heating conductor are connected to electrical supply lines arranged on the pressure side and on the suction side of the wind turbine rotor blade. The heating elements are connected in parallel to these supply lines.

Departing therefrom, it is an object of the invention to provide a method of manufacturing a wind turbine rotor blade with a set of heating elements that helps to avoid unnecessary repair work.

This object is solved by the method of claim 1. The method of manufacturing a wind turbine rotor blade with a set of heating elements comprises the following steps:
a) providing a wind turbine rotor blade having a first electrical supply line and a second electrical supply line,
b) providing a set of heating elements,
c) arranging one of the heating elements on the wind turbine rotor blade and connecting this heating element to the first electrical supply line and to the second electrical supply line,
d) measuring an electrical resistance between the first electrical supply line and the second electrical supply line and comparing the measured electrical resistance to an expected electrical resistance of a parallel connection of all of the heating elements already connected to the first electrical supply line and to the second electrical supply line,
e) if the measured electrical resistance corresponds to the expected electrical resistance, completing the steps c) and d) for another one of the electrical heating elements of the set of heating elements until all of the heating elements are connected.

The wind turbine rotor blade has an outer surface which corresponds to an aerodynamic surface of the wind turbine rotor blade. The wind turbine rotor blade may comprise a shell structure forming the outer surface, for example with two wind turbine rotor blade half shells, such as a pressure side half shell and a suction side half shell.

Each of the heating elements of the set of heating elements is supplied with heating power via the first and second electrical supply lines. These may be arranged on a pressure side and on a suction side, respectively. Each heating element is to be connected to both electrical supply lines. When all heating elements are connected to both supply lines, the heating elements are connected in parallel so that a certain share of a total heating current supplied via the supply lines will flow through each of the heating elements. The heating current will heat the heating elements and the respective surface area of the wind turbine rotor blade in order to remove accumulated ice (de-icing) and/or in order to prevent the formation of ice (anti-icing) on this surface area.

The electrical supply lines of the wind turbine rotor blade are typically integrated into the corresponding wind turbine rotor blade shell members during production of the shell members. The electrical supply lines may also be fastened to a wind turbine rotor blade shell member or to the wind turbine rotor blade at a later point in time. The electrical supply lines may include one or more connection points for connecting the respective heating conductors. A connection point may comprise, for example a metal block, a thread or a clamp.

Each heating element may be designed for being arranged on a specific area of an outer surface of the wind turbine rotor blade. The geometry of the heating element may generally correspond to this surface area. The geometry may be rectangular or trapezoidal, for example, wherein the edges may be straight or curved. The heating elements may have the same geometry or may have different geometries. The heating elements may be generally flat, flexible members, therefore sometimes referred to as heating mats. The heating elements may be installed in a row along a longitudinal direction of the wind turbine rotor blade. The heating elements may be arranged side-by-side, so that a relatively large, coherent surface area will be covered by the plurality of the heating elements and can be heated.

When the heating system is supplied with an operating voltage, for example in a range from 100 V to 1000 V, typically about 400 V, the total heating current follows from Ohm's law based on the electrical resistance of the set of heating elements. The distribution of the total heating current results from the electrical resistances of the individual heating elements. Each of the heating elements may have a known, nominal electrical resistance. In the alternative, the electrical resistances of each of the heating elements can be determined by a resistance measurement prior to connecting the respective heating element to the electrical supply lines.

When following a conventional quality assurance process, the wind turbine rotor blade will undergo various test procedures before leaving the factory. These include testing of the heating system by supplying a heating current. The temperature distribution of the wind turbine rotor blade's outer surface can be inspected for example with an infrared camera system. Whenever irregularities are detected, for example that a certain surface area does not reach the desired temperature, determining the root cause and carrying out the required repair work is a difficult and cumbersome process. For example, when a certain heating element not reaching the desired temperature has been identified, the problem may be caused by an improper connection to one of the supply lines or by a broken heating conductor anywhere within the heating element. When carrying out the conventional testing, the heating element will typically be fixedly connected to the wind turbine rotor blade's outer surface and possibly covered by a coating and/or a protective layer. It is therefore difficult to fix the problem. In many cases, it will become necessary to remove the heating element by grinding, which may lead to collateral damage of neighboring heating elements, and to install a new heating element.

The inventor realized that most of the defects detected at the final stage can be avoided when additional quality assurance measures are taken at an earlier stage, while manufacturing the heating system. These measures follow a stepwise approach, confirming that the heating elements arranged on the wind turbine rotor blade are built and connected to specifications one by one. Once in step c) one of the heating elements has been arranged on the wind turbine rotor blade and connected to the first and second electrical supply lines, the electrical resistance between both supply lines is measured in step d). Step d) also encompasses comparing the measured electrical resistance to an expected electrical resistance of a parallel connection of the heating elements already connected. The expected electrical resistance can be determined based on the known electrical resistances of the heating elements already connected.

When steps c) and d) are carried out for the first time for a first one of the heating elements, the expected electrical resistance essentially corresponds to the known electrical resistance of the first heating element. If desired, an additional electrical resistance of the supply lines can be taken into account. However, this additional electrical resistance is relatively low and may be neglected. When the second heating element has been connected, the expected electrical resistance essentially corresponds to the electrical resistance of the first and second heating elements when connected in parallel, and so forth. For each additional heating element connected to the supply lines, the expected electrical resistance will decrease by a certain, predictable amount.

When the step of comparing the measured electrical resistance to the expected electrical resistance shows a difference larger than a given/acceptable tolerance, the most likely cause is that something went wrong with the most recently connected heating element. When the comparison shows that the measured electrical resistance corresponds within a given tolerance to the expected electrical resistance, it can be concluded that the most recently connected heating element is connected properly to both electrical supply lines and will in operation deliver the specified heating power.

We note that the steps included in step c) can be carried out in any order. For example, one may arrange more than one of the heating elements on the wind turbine rotor blade at a time, and/or one may also connect more than one heating element either to the first electrical supply line or to the second electrical supply line at a time. However, it is important that step d) is carried out for each of the heating elements separately. Whenever step c) has been completed for a certain heating element, it is required to carry out step d) for this heating element before completing step c) for any other heating element.

When all heating elements are connected and for each of the heating elements it has been confirmed in step d) that the measured electrical resistance is within tolerance, it has been made sure that the entire heating system has been properly installed. A final test of the heating properties may still be required before the wind turbine rotor blade can leave the factory, in particular because the heating system may get damaged at a later manufacturing stage of the wind turbine rotor blade. This, however, is highly unlikely. Any repair work related to the heating system will thus occur only in rare cases.

Although the step of connecting a heating element to the electrical supply lines may be considered as simple and straightforward process, the inventor realized that problems with these connections occur more frequently than one may expect. The extra effort for carrying out steps c) and d) for each of the heating elements for this reason alone is worthwhile. In addition, carrying out the comparison of step d) for each of the heating elements individually is the key to attributing deviations to a specific one of the heating elements as well as for a reliable detection of each individual defect.

For example, when carrying out steps c) and d) for more than one heating element at a time, the measured electrical resistance may still be within tolerance if only one of the heating elements has not been properly connected, in particular when the higher resistance caused by the improper connection is compensated for by a lower resistance of another heating element. On the other hand, when the measured electrical resistance is out of tolerance, one cannot determine which heating elements have not been properly connected.

The inventive method can be carried out with little additional effort. The manufacturing process of the wind turbine rotor blade can be streamlined, and substantial time and cost savings can be achieved.

In an aspect, if in step d) a measured electrical resistance does not correspond to the expected electrical resistance, the measurement of the electrical resistance is repeated. That the measured electrical resistance corresponds to the expected electrical resistance means that any deviation between these two figures is within a defined tolerance. Repeating the measurement in case of a deviation avoids taking unnecessary measures based on a measurement failure.

In an aspect, if in step d) a measured electrical resistance does not correspond to the expected electrical resistance, the heating element most recently connected to the first electrical supply line and to the second electrical supply line and the respective electrical connections are inspected. The inspection can be done visually, but may also include mechanical testing or applying more advanced measurement techniques. Should the inspection reveal a certain defect, it is in most cases simple to repair the faulty connection and/or to replace the heating element.

In an aspect, if in step d) a measured electrical resistance does not correspond to the expected electrical resistance, the heating element most recently connected to the first electrical supply line and to the second electrical supply line is disconnected from at least one of the electrical supply lines and the electrical resistance of the heating element is measured and compared to a nominal electrical resistance of this heating element. It can then easily be determined whether the heating element itself is defective and should be replaced.

In an aspect, if the electrical resistance of this heating element does not correspond to its nominal value, the heating element is replaced by a new heating element. At this stage of the manufacturing process, replacing a heating element by a new one is a simple task.

In an aspect, the set of heating elements includes heating elements with different nominal electrical resistances. The heating power provided by each heating element can thereby be adapted to the heated surface area and to the operating conditions of the specific heating element. The inventive method can nevertheless be carried out as has been described before, because the expected electrical resistance can easily be calculated even if each of the heating elements has a different nominal electrical resistance.

In an aspect, the first heating element used in steps c) and d) is the one of the heating elements that is arranged nearest to a blade tip of the wind turbine rotor blade. All other heating elements can then be added one by one, starting with the heating element second nearest to the blade tip.

In an aspect, the values of the electrical resistances measured in step d) are registered in a computer program. In further aspects, the computer program determines the expected electrical resistances used in step d) based on known electrical resistances of the heating elements and/or the computer program carries out the comparison in step d). Using a computer program makes it easy to keep track of the various measurements and helps identifying any meaningful deviations directly when entering a measured value. In particular, the computer program may provide the user with a template including input fields for each electrical resistance to be measured. Thereby, the computer program may provide a user with simple and effective guidance as to in which order the various measurements should be taken.

In an aspect, in step d), the electrical resistance is measured with a measurement device that stays connected to the first supply line and to the second supply line from the first measurement to the last measurement. This makes taking the various measurements specifically easy and also helps obtaining consistent data.

In an aspect, when steps c) and d) have been carried out for all of the heating elements and all of the electrical resistances measured in step d) corresponded to the respective expected electrical resistances, the heating elements are fixedly connected to the wind turbine rotor blade by adding a liquid polymer and curing the polymer, wherein the liquid polymer is added in particular in a vacuum infusion process. These steps complete the installation of the heating system and are preferably only carried out after the correct installation of each of the heating elements has been confirmed.

In an aspect, a cover layer is provided on top of the heating elements before adding the liquid polymer. The cover layer may include in particular a layer of glass fibers. The cover layer provides protection for the heating elements and also helps obtaining a smooth outer surface of the wind turbine rotor blade.

In an aspect, each of the heating elements comprises a carrier layer and a heating conductor fastened to the carrier layer. The carrier layer provides a basis for arranging the heating conductor in a desired configuration and allows simple handling of the heating element. When the heating elements are arranged in their defined operating positions, each carrier layer may have a first edge facing the blade tip and a second edge facing the blade root. The first and second edges may be arranged essentially in a chordal plane and/or perpendicular to a longitudinal axis of the wind turbine rotor blade. The heating conductor may comprise a metal heating wire or a bundle of carbon fibers, for example. The carrier layer may comprise a grid, web of fabric of fibers. Preferably, electrically non-conductive fibers are selected, such as glass fibers, for example.

In an aspect, the first electrical supply line and/or the second electrical supply line is arranged at an inner side of a wind turbine rotor but shell structure and/or is integrated into a wind turbine rotor blade shell structure, in particular in a vacuum infusion process.

In the following, the invention is explained in greater detail with reference to the drawings:
Fig. 1 shows a wind turbine rotor blade in a perspective view,
Fig. 2 shows the wind turbine rotor blade of Fig. 1 in cross section,
Fig. 3 shows parts of a heating system of the wind turbine rotor blade of Figs. 1 and 2 in a schematic view, with one heating element installed,
Fig. 4 shows parts of a heating system of the wind turbine rotor blade of Figs. 1 and 2 in a schematic view, with two heating elements installed,
Fig. 5 shows a template used to carry out the method assisted by a computer program.

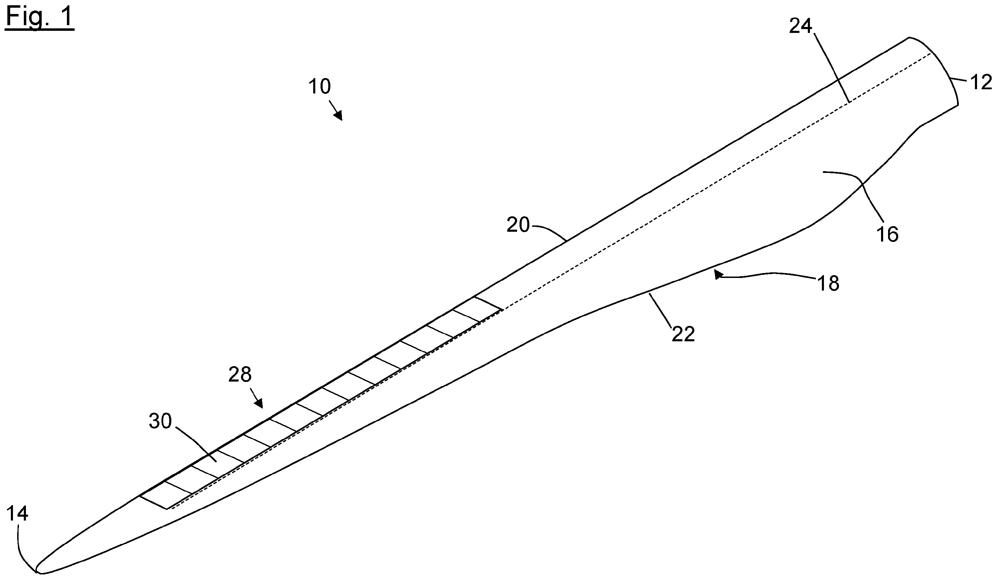

Figure 1 shows a wind turbine rotor blade 10 with a blade root 12, a blade tip 14, a suction side 16 and a pressure side 18. The suction side 16 and the pressure side 18 each extend between a leading edge 20 and a trailing edge 22.

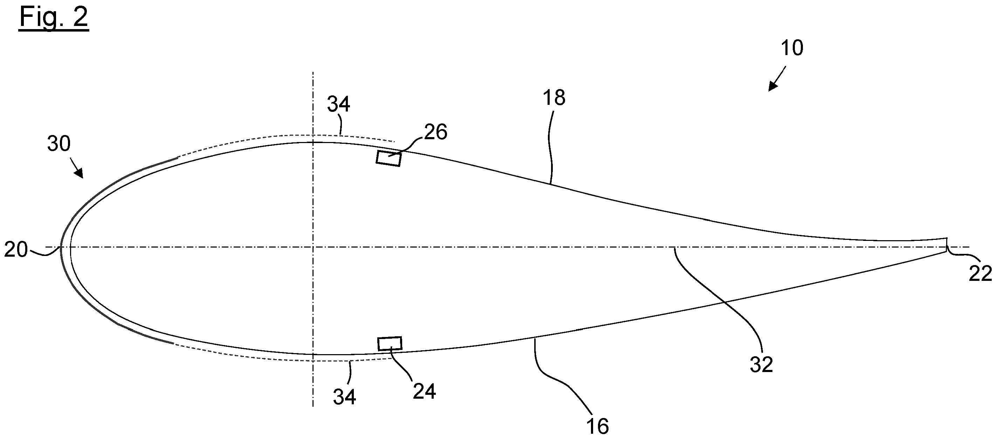

A first electrical supply line 24 is arranged on the suction side 16. A second electrical supply line 26 (see Fig. 2) is arranged on the pressure side 18. Both electrical supply lines 24, 26 extend in a longitudinal direction of the wind turbine rotor blade 10, from the blade root 12 towards the blade tip 14.

The wind turbine rotor blade 10 is provided with a heating system 28 comprising a plurality of heating elements 30. The heating elements 30 are arranged on the outer surface of the wind turbine rotor blade 10 in a row along the longitudinal direction.

Figure 2 shows a cross-section through the wind turbine rotor blade 10 at a longitudinal position including one of the heating elements 30. The wind turbine rotor blade 10 has a chord 32 extending between the leading edge 20 and the trailing edge 22. The heating element 30 extends over the leading edge 20 and covers a front section of the suction side 16 and a front section of the pressure side 18.

The first electrical supply line 24 is integrated in a wind turbine rotor blade half shell forming the suction side 16, the second electrical supply line 26 is integrated in a wind turbine rotor blade half shell forming the pressure side 18. Each of the heating elements 30 is connected to the first electrical supply line 24 and to the second electrical supply line 26 by means of a connecting section 34 of a heating conductor so that the heating element 30 can be provided with a heating current.

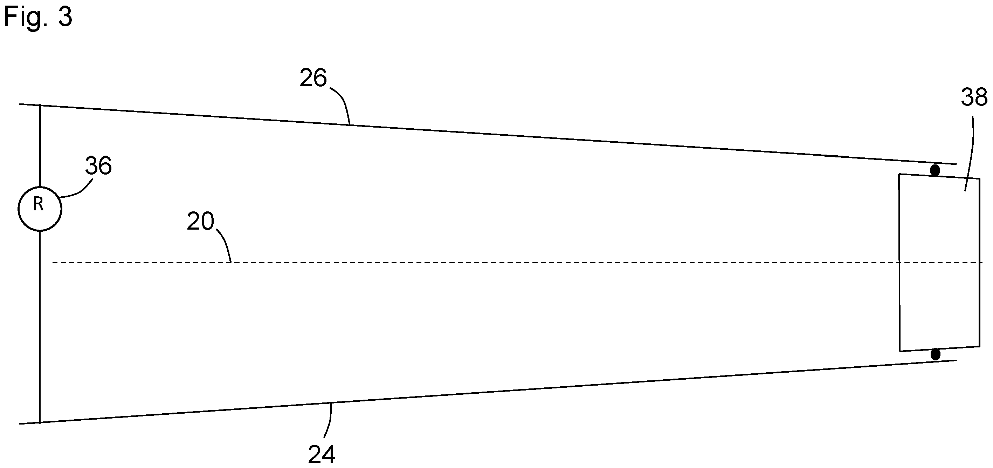

Figure 3 shows a schematic view on the wind turbine rotor blade 10 of Figs. 1 and 2. The leading edge 20 of the wind turbine rotor blade 10 is indicated by a dashed line. The first electrical supply line 24 and the second electrical supply line 26 are also shown. A first heating element 38 has been arranged on the wind turbine rotor blade 10 nearest to the blade tip 14 (not shown in Fig. 3), and has been connected to the first electrical supply line 24 and the second electrical supply line 26. For the first heating element 38, step c) has thus been completed.

The measurement of the electrical resistance according to step d) is carried out for the first heating element 38 with a resistance measurement device 36 by guiding a low test current (such as 1 mA, for example) through the first electrical supply line 24, the second electrical supply line 26 and the first heating element 38, and by recording the required voltage.

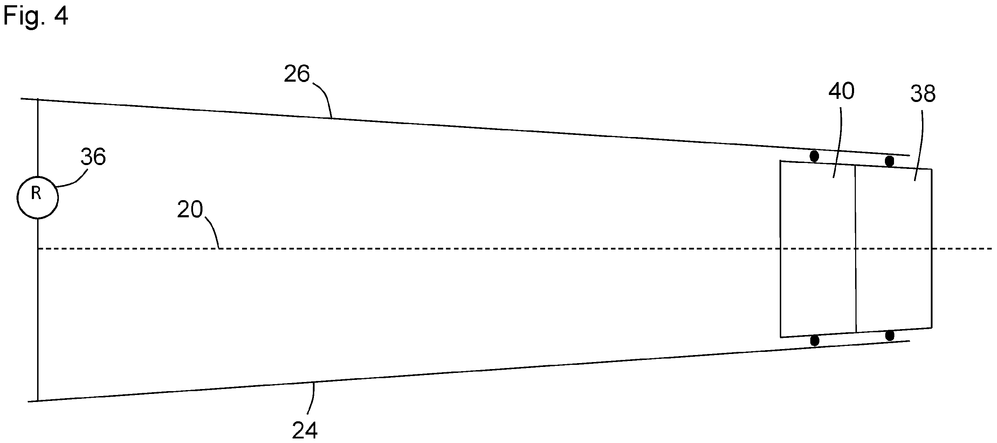

In a later step illustrated in Fig. 4, step c) has been completed for a second heating element 40 arranged adjacent to the first heating element 30. The resistance measurement device 36 is still connected to both electrical supply lines 24, 26.

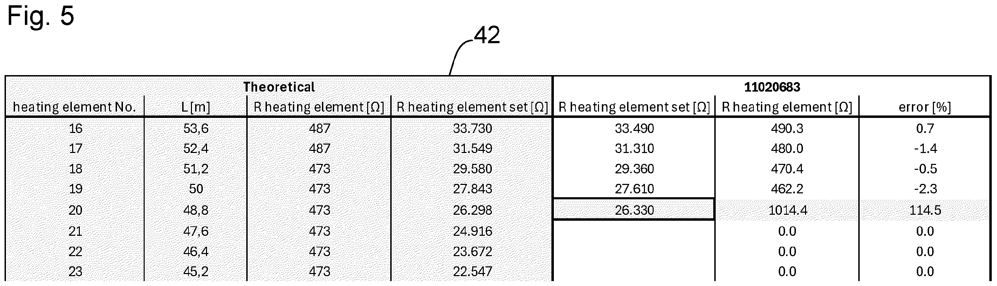

Figure 5 illustrates a template 42 provided by a computer program used to carry out the method. The template 42 includes a table having one row for each heating element 30. In the columns of the template 42, the following data is indicated/recorded:

| | |
|---|---|
| Row 1: | a number of the heating element |
| Row 2: | a radial position of the heating element |
| Row 3 | a nominal electrical resistance of the heating element |
| Row 4 | an expected electrical resistance of a parallel connection of the heating element in the respective row and all heating elements of the previous rows |
| Row 5 | a measured electrical resistance of a parallel connection of the heating element in the respective row and all heating elements of the previous rows, measured in step d) carried out after step c) has been completed for the heating element of this row and for all heating elements of the previous rows |
| Row 6 | the electrical resistance of the heating element of this row, calculated based on the measurement data recorded in row 5 |
| Row 7 | a deviation in % of the electrical resistance indicated in row 6 from the nominal value indicated in row 3 |

The data show that for each of the heating elements #16 to #19, the method leads to deviations of less than 2.5 %, thereby confirming that these heating elements have been properly connected. For heating element #20, a large deviation of 114.5 % was calculated, revealing that this heating element either has an internal defect or has not been connected properly to at least one of the electrical supply lines 24, 26.

### List of reference numerals

- 10: wind turbine rotor blade
- 12: blade root
- 14: blade tip
- 16: suction side
- 18: pressure side
- 20: leading edge
- 22: trailing edge
- 24: first electrical supply line
- 26: second electrical supply line
- 28: heating system
- 30: heating element
- 32: chord
- 34: connecting section
- 36: resistance measurement device
- 38: first heating element
- 40: second heating element
- 42: template

## Claims

1. A method of manufacturing a wind turbine rotor blade (10) with a set of heating elements (30, 38, 40), the method comprising the following steps:
a) providing a wind turbine rotor blade (10) having a first electrical supply line (24) and a second electrical supply line (26),
b) providing a set of heating elements (30, 38, 40),
c) arranging one of the heating elements (30, 38, 40) on the wind turbine rotor blade (10) and connecting this heating element (30, 38, 40) to the first electrical supply line (24) and to the second electrical supply line (26),
d) measuring an electrical resistance between the first electrical supply line (24) and the second electrical supply line (26) and comparing the measured electrical resistance to an expected electrical resistance of a parallel connection of all of the heating elements (30, 38, 40) already connected to the first electrical supply line (24) and to the second electrical supply line (26),
e) if the measured electrical resistance corresponds to the expected electrical resistance, completing the steps c) and d) for another one of the electrical heating elements (30, 38, 40) of the set of heating elements (30, 38, 40) until all of the heating elements (30, 38, 40) are connected.

2. The method of claim 1, wherein, if in step d) a measured electrical resistance does not correspond to the expected electrical resistance, the measurement of the electrical resistance is repeated.

3. The method of claim 1 or 2, wherein, if in step d) a measured electrical resistance does not correspond to the expected electrical resistance, the heating element (30, 38, 40) most recently connected to the first electrical supply line (24) and to the second electrical supply line (26) and the respective electrical connections are inspected.

4. The method of any of the claims 1 to 3, wherein, if in step d) a measured electrical resistance does not correspond to the expected electrical resistance, the heating element (30, 38, 40) most recently connected to the first electrical supply line (24) and to the second electrical supply line (26) is disconnected from at least one of the electrical supply lines (24, 26) and the electrical resistance of this heating element (30, 38, 40) is measured and compared to a nominal electrical resistance of this heating element (30, 38, 40).

5. The method of claim 4, wherein, if the electrical resistance of this heating element (30, 38, 40) does not correspond to its nominal value, this heating element (30, 38, 40) is replaced by a new heating element (30, 38, 40).

6. The method of any of the claims 1 to 5, wherein the set of heating elements (30, 38, 40) includes heating elements (30, 38, 40) with different nominal electrical resistances.

7. The method of any of the claims 1 to 6, wherein the first heating element (38) used in steps c) and d) is the one of the heating elements (30, 38, 40) that is arranged nearest to a blade tip (14) of the wind turbine rotor blade (10).

8. The method of any of the claims 1 to 7, wherein the values of the electrical resistances measured in step d) are registered in a computer program.

9. The method of claim 8, wherein the computer program determines the expected electrical resistances used in step d) based on known electrical resistances of the heating elements (30, 38, 40).

10. The method of claim 8 or 9, wherein the computer program carries out the comparison in step d).

11. The method of any of the claims 1 to 10, wherein in step d), the electrical resistance is measured with a measurement device (36) that stays connected to the first supply line (24) and to the second supply line (26) from a first measurement to a measurement.

12. The method of any of the claims 1 to 11, wherein, when steps c) and d) have been carried out for all of the heating elements (30, 38, 40) and all of the electrical resistances measured in step d) corresponded to the respective expected electrical resistances, the heating elements (30, 38, 40) are fixedly connected to the wind turbine rotor blade (10) by adding a liquid polymer and curing the polymer, wherein the liquid polymer is added in particular in a vacuum infusion process.

13. The method of claim 12, wherein a cover layer is provided on top of the heating elements (30, 38, 40) before adding the liquid polymer.

14. The method of any of the claims 1 to 13, wherein each of the heating elements (30, 38, 40) comprises a carrier layer and a heating conductor fastened to the carrier layer.

15. The method of any of the claims 1 to 14, wherein the first electrical supply line (24) and/or the second electrical supply line (26) is arranged at an inner side of a wind turbine rotor blade shell structure and/or is integrated into a wind turbine rotor blade shell structure, in particular in a vacuum infusion process.
